# EUROPEAN PATENT APPLICATION

(11) **EP 4 209 523 A1**
(43) Date of publication of application: **12.07.2023**
(21) Application number: 21864411.0
(22) Date of filing: 02.09.2021
(51) Int. Cl.: C08F 283/12, C08F 290/14, C08G 59/30, C08G 77/392, C08G 77/442

(54) **SILICONE COPOLYMER**

(30) Priority: 03.09.2020 JP 2020148430
(71) Applicant: Daikin Industries, Ltd., Osaka-shi, Osaka 530-0001 (JP)
(72) Inventor: SHIBUTANI, Shouta, Osaka-shi, Osaka 530-8323 (JP); OKUNO, Shingo, Osaka-shi, Osaka 530-8323 (JP)
(74) Representative: Hoffmann Eitle
(86) International application number: PCT/JP2021/032325
(87) International publication number: WO 2022/050358

(57) **Abstract**

The present invention provides a silicone copolymer represented by formula (1) or (2).

## Description

### Technical Field

The present disclosure relates to a silicone copolymer.

### Background Art

Certain types of silicone compounds are known to be capable of providing excellent functions such as antifouling properties when used in surface treatment of a substrate. A layer obtained from a surface-treating agent containing a silicone compound is applied as a so-called functional thin film to a substrate such as a plastic.

### Citation List

### Patent Literature

Patent Literature 1: JP 2009-143048 A

### Summary of Invention

### Technical Problem

The silicone compound described in Patent Literature 1 can impart functions such as antifouling properties to a substrate, but is not sufficiently soluble in solvents, and may cause a problem in the formation of a surface-treating layer.

### Solution to Problem

[1] A silicone copolymer represented by the following formula (1) or (2): 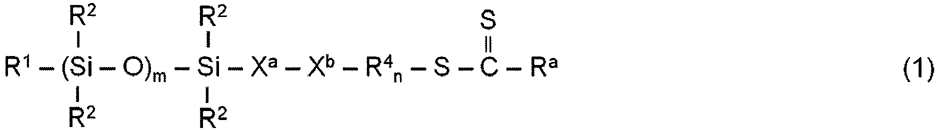 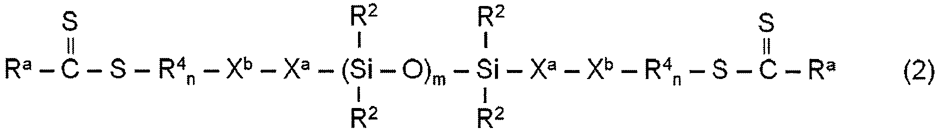 wherein
   R¹ is a hydrogen atom or a C₁₋₆ alkyl group;
   R² is each independently at each occurrence a hydrogen atom or a C₁₋₆ alkyl group;
   m is an integer of 1 to 300;
   R⁴ is each independently at each occurrence R^{4a} or R^{4b};
   R^{4a} is each independently at each occurrence a divalent organic group having a crosslinkable group;
   R^{4b} is each independently at each occurrence a divalent organic group not having a crosslinkable group;
   the crosslinkable group is a group containing a carbon-carbon double bond, a carbon-carbon triple bond, a cyclic ether group, a hydroxyl group, a thiol group, an amino group, an azide group, a nitrogen-containing heterocyclic group, an isocyanate group, a halogen atom, a phosphoric acid-containing group, or a silane coupling group, or a group containing a precursor group thereof;
   n is an integer of 1 to 90;
   X^{a} is each independently a divalent organic group;
   X^{b} is each independently a divalent organic group;
   R^{a} is each independently alkyl, phenyl, -SR^{a1}, -OR^{a2}, - NR^{a3}₂, 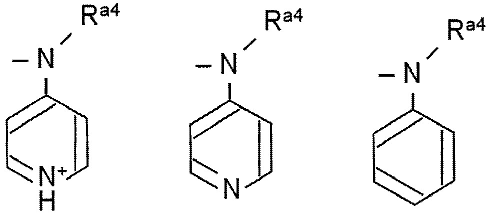 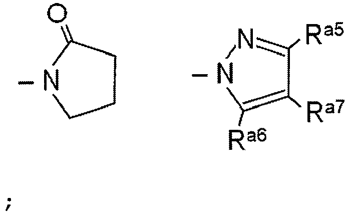
   R^{a1}, R^{a2}, R^{a3}, R^{a4}, R^{a5}, and R^{a6} are each independently an alkyl group or a phenyl group; and
   R^{a7} is a hydrogen atom or a halogen atom.
[2] The silicone copolymer according to [1], which is hydrophobic.
[3] The silicone copolymer according to [1] or [2], wherein the crosslinkable group is an epoxy group, a glycidyl group, an alicyclic epoxy group, a vinyl group, an allyl group, an optionally substituted acryloyl group, a cinnamoyl group, a 2,4-hexadienoyl group, a vinylether (vinyloxy) group, a hydroxyl group, an oxetanyl group, an isocyanate group, a catechol group, a thiol group, an amino group, an alkylamino group, a dialkylamino group, an azide group, a phosphoric acid-containing group, a carboxyl group, an imidazolyl group, a triazolyl group, a benzotriazolyl group, a tetrazolyl group, a halogen atom, a silane coupling group, or a precursor group thereof.
[4] The silicone copolymer according to any one of [1] to [3], wherein R⁴ is R^{4a}.
[5] The silicone copolymer according to any one of [1] to [4], wherein R^{4a} is a group represented by the following formula: 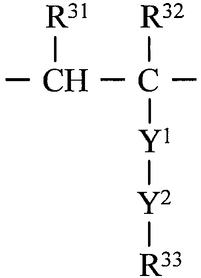 wherein
   R³¹ is each independently at each occurrence a hydrogen atom or an alkyl group;
   R³² is each independently at each occurrence a hydrogen atom, a chlorine atom, a fluorine atom, or an alkyl group optionally substituted with fluorine;
   R³³ is each independently at each occurrence a crosslinkable group;
   Y¹ is a single bond, -C(=O)O-, -C(=O)NH-, -OC(=O)-, - NHC(=O)-, -O-, -N(R^{c})-, an aromatic ring, an aromatic ring having a substituent, or carbazolylene;
   R^{c} is an organic group; and
   Y² is a single bond or a linker having 1 to 16 atoms in the main chain.
[6] The silicone copolymer according to any one of [1] to [5], wherein the crosslinkable group in R^{4a} is an epoxy group, a glycidyl group, an alicyclic epoxy group, an acryloyl group, or a methacryloyl group.
[7] The silicone copolymer according to any one of [1] to [6], wherein n is an integer of 2 to 70.
[8] The silicone copolymer according to any one of [1] to [7], wherein n is an integer of 3 to 60.
[9] The silicone copolymer according to any one of [1] to [8], wherein R² is each independently at each occurrence a C₁₋₆ alkyl group.
[10] The silicone copolymer according to any one of [1] to [9], wherein m is an integer of 2 to 250.
[11] A surface-treating agent comprising one or more silicone copolymers according to any one of [1] to [10].
[12] A curable composition comprising:
   the silicone copolymer according to any one of [1] to [10] or the surface-treating agent according to [11]; and
   a matrix-forming composition.
[13] A film formed from the surface-treating agent according to [11] or the curable composition according to [12].
[14] An article comprising:
   a substrate; and
   a layer formed on a surface of the substrate from the surface-treating agent according to [11] or the curable composition according to [12].
[15] The article according to [14], which is an optical member.
[16] The article according to [14], which is a LiDAR cover member.
[17] The article according to [14], which is a sensor member.
[18] The article according to [14], which is an instrument panel cover member.
[19] The article according to [14], which is an automobile interior member.

### Advantageous Effect of Invention

The silicone copolymer of the present disclosure has high solubility in a solvent and can be suitably used as a surface-treating agent.

### Description of Embodiments

The term "organic group", as used herein, refers to a monovalent group containing carbon. The organic group may be a hydrocarbon group or a derivative thereof, unless otherwise specified. The derivative of a hydrocarbon group refers to a group that has one or more of N, O, S, Si, amide, sulfonyl, siloxane, carbonyl, carbonyloxy, and the like at the terminal or in the molecular chain of the hydrocarbon group. The term simply referred to as an "organic group" means a monovalent organic group. The term "divalent organic group" refers to a divalent group containing carbon. The divalent organic group may be, but is not limited to, a divalent group obtained by further removing one hydrogen atom from an organic group.

The term "hydrocarbon group", as used herein, refers to a group that contains carbon and hydrogen and that is obtained by removing one hydrogen atom from a hydrocarbon. The hydrocarbon group is not limited, and examples include a C₁₋₂₀ hydrocarbon group optionally substituted with one or more substituents, such as an aliphatic hydrocarbon group and an aromatic hydrocarbon group. The "aliphatic hydrocarbon group" may be either linear, branched, or cyclic, and may be either saturated or unsaturated. The hydrocarbon group may contain one or more ring structures.

The substituent of the "hydrocarbon group", as used herein, is not limited, and examples thereof include one or more groups selected from a halogen atom, and a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5 to 10-membered heterocyclyl group, a 5 to 10-membered unsaturated heterocyclyl group, a C₆₋₁₀ aryl group, and a 5 to 10-membered heteroaryl group each optionally substituted with one or more halogen atoms.

Examples of the "alkyl group" as used herein, unless otherwise specified, include alkyl groups having 1 to 12 (preferably 1 to 6, more preferably 1 to 3, and even more preferably 1) carbon atoms (e.g., a methyl group, an ethyl group, a propyl group, and an isopropyl group). The "alkyl group" may be linear or branched, and is preferably linear. Moreover, the "alkyl group" may contain a functional group.

Below, the silicone copolymer of the present disclosure will now be described.

A silicone copolymer represented by the following formula (1) or (2) is provided: 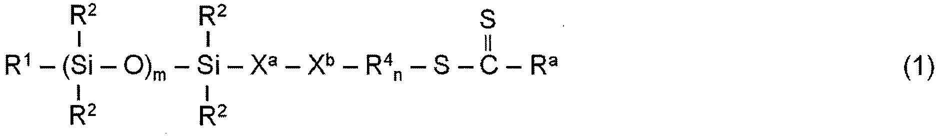 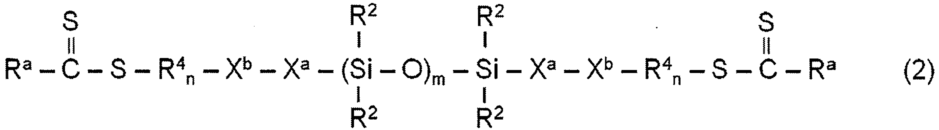 wherein
R¹ is a hydrogen atom or a C₁₋₆ alkyl group;
R² is each independently at each occurrence a hydrogen atom or a C₁₋₆ alkyl group;
m is an integer of 1 to 300;
R⁴ is each independently at each occurrence R^{4a} or R^{4b};
R^{4a} is each independently at each occurrence a divalent organic group having a crosslinkable group;
R^{4b} is each independently at each occurrence a divalent organic group not having a crosslinkable group;
the crosslinkable group is a group containing a carbon-carbon double bond, a carbon-carbon triple bond, a cyclic ether group, a hydroxyl group, a thiol group, an amino group, an azide group, a nitrogen-containing heterocyclic group, an isocyanate group, a halogen atom, a phosphoric acid-containing group, a silane coupling group, or a group containing a precursor group thereof;
n is an integer of 1 to 90;
X^{a} is each independently a divalent organic group;
X^{b} is each independently a divalent organic group;
R^{a} is each independently alkyl, phenyl, -SR^{a1}, -OR^{a2}, - NR^{a3}₂, 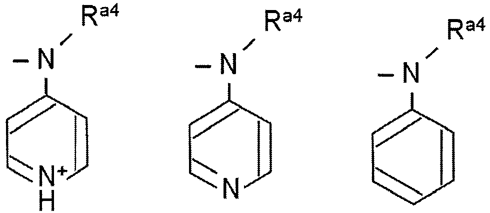 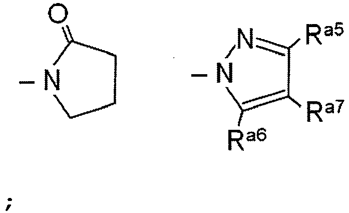
R^{a1}, R^{a2}, R^{a3}, R^{a4}, R^{a5}, and R^{a6} are each independently an alkyl group or a phenyl group; and
R^{a7} is a hydrogen atom or a halogen atom.

In the formula (1), R¹ is a hydrogen atom or a C₁₋₆ alkyl group.

R¹ is preferably a C₁₋₆ alkyl group, and more preferably a C₁₋₄ alkyl group.

In the formulae (1) and (2), R² is each independently at each occurrence a hydrogen atom or a C₁₋₆ alkyl group.

R² is each independently at each occurrence preferably a C₁₋₆ alkyl group, more preferably a C₁₋₃ alkyl group, and even more preferably methyl.

In the formulae (1) and (2), m is an integer of 1 to 300, preferably an integer of 2 to 250, more preferably an integer of 2 to 200, and even more preferably an integer of 5 to 150.

In the formulae (1) and (2), R⁴ is each independently at each occurrence R^{4a} or R^{4b}.

R^{4a} is each independently at each occurrence a divalent organic group having a crosslinkable group.

The crosslinkable group means a group capable of undergoing a reaction under predetermined conditions to form a crosslinked structure.

The crosslinkable group is preferably a group containing a carbon-carbon double bond, a carbon-carbon triple bond, a cyclic ether group, a hydroxyl group, a thiol group, an amino group, an azide group, a nitrogen-containing heterocyclic group, an isocyanate group, a halogen atom, a phosphoric acid-containing group, or a silane coupling group, or a group containing a precursor group thereof.

Examples of the crosslinkable group include an epoxy group, a glycidyl group, an alicyclic epoxy group, a vinyl group, an allyl group, an optionally substituted acryloyl group, a cinnamoyl group, a 2,4-hexadienoyl group, a vinylether (vinyloxy) group, a hydroxyl group, an oxetanyl group, an isocyanate group, a catechol group, a thiol group, an amino group, an alkylamino group, a dialkylamino group, an azide group, a phosphoric acid-containing group, a carboxyl group, an imidazolyl group, a triazolyl group, a benzotriazolyl group, a tetrazolyl group, a halogen atom, or a silane coupling group, or a precursor group thereof.

The alicyclic epoxy group is preferably a group represented by the following formula: 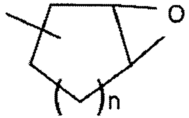 wherein n is an integer of 1 to 5.

The alicyclic epoxy group is more preferably

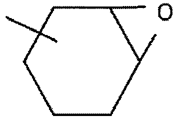

The optionally substituted acryloyl group is a group represented by CH₂=CX¹-C(O)-.

X¹ is a hydrogen atom, a chlorine atom, a fluorine atom, or an alkyl group having 1 to 10 carbon atoms optionally substituted with fluorine, and is preferably an alkyl group having 1 to 10 carbon atoms and more preferably an alkyl group having 1 to 3 carbon atoms, such as a methyl group.

The optionally substituted acryloyl group is preferably an acryloyl group or a methacryloyl group. Below, an acryloyl group and a methacryloyl group will be collectively referred to as a "(meth)acryloyl group".

The phosphoric acid-containing group is not limited as long as it contains a phosphoric acid group, and may be, for example, C₁₋₆ alkylene-OP(O)(OH)(OR) wherein R is a hydrogen atom or C₁₋₃ alkyl.

In one embodiment, the crosslinkable group may be an epoxy group, a glycidyl group, an alicyclic epoxy group, a vinyl group, an allyl group, a (meth)acryloyl group, a cinnamoyl group, a 2,4-hexadienoyl group, or a vinyl ether (vinyloxy) group.

In a preferable embodiment, the crosslinkable group may be an epoxy group, a glycidyl group, or CH₂=CX¹'-C(O)-(wherein X¹' represents a hydrogen atom, a chlorine atom, a fluorine atom, or an alkyl group that has 1 to 10 carbon atoms and that is optionally substituted with fluorine), and preferably an epoxy group, a glycidyl group, or a (meth)acryloyl group.

In another preferable embodiment, the crosslinkable group may be an epoxy group, a glycidyl group, an alicyclic epoxy group, or a (meth)acryloyl group, preferably an epoxy group, a glycidyl group, or an alicyclic epoxy group, and more preferably an epoxy group or a glycidyl group.

In a preferable embodiment, R^{4a} is a group represented by the following formula: 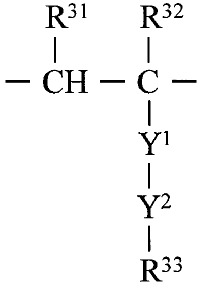 wherein
R³¹ is each independently at each occurrence a hydrogen atom or an alkyl group;
R³² is each independently at each occurrence a hydrogen atom, a chlorine atom, a fluorine atom, or an alkyl group optionally substituted with fluorine;
R³³ is each independently at each occurrence a crosslinkable group;
Y¹ is a single bond, -C(=O)O-, -C(=O)NH-, -OC(=O)-, - NHC(=O)-, -O-, -N(R^{c})-, an aromatic ring, an aromatic ring having a substituent, or carbazolylene;
R^{c} is an organic group; and
Y² is a single bond or a linker having 1 to 16 atoms in a main chain.

In the formula, R³¹ each independently at each occurrence represents a hydrogen atom or an alkyl group. The alkyl group is preferably a C₁₋₆ alkyl group, more preferably a C₁₋₃ alkyl group, and even more preferably a methyl group or an ethyl group. R³¹ is preferably a hydrogen atom.

In the formula, R³² each independently at each occurrence represents a hydrogen atom, a chlorine atom, a fluorine atom, or an alkyl group optionally substituted with fluorine. The alkyl group is preferably a C₁₋₆ alkyl group, more preferably a C₁₋₃ alkyl group, and even more preferably a methyl group or an ethyl group. R³² is preferably a methyl group or a hydrogen atom, and more preferably a hydrogen atom.

R³³ is each independently at each occurrence a crosslinkable group. The crosslinkable group is as defined above.

In a preferable embodiment, R³³ may be an epoxy group, a glycidyl group, an alicyclic epoxy group, a vinyl group, an allyl group, an optionally substituted acryloyl group, a cinnamoyl group, a 2,4-hexadienoyl group, a vinylether (vinyloxy) group, a hydroxyl group, an oxetanyl group, an isocyanate group, a catechol group, a thiol group, an amino group, an alkylamino group, a dialkylamino group, an azide group, a phosphoric acid-containing group, a carboxyl group, an imidazolyl group, a triazolyl group, a benzotriazolyl group, a tetrazolyl group, a halogen atom, a silane coupling group, or a precursor group thereof.

In a more preferable embodiment, R³³ may be an epoxy group, a glycidyl group, an alicyclic epoxy group, a vinyl group, an allyl group, a (meth)acryloyl group, a cinnamoyl group, a 2,4-hexadienoyl group, or a vinyl ether (vinyloxy) group.

In a more preferable embodiment, the crosslinkable group may be an epoxy group, a glycidyl group, an alicyclic epoxy group, or a (meth)acryloyl group, and preferably an epoxy group, a glycidyl group, or a (meth)acryloyl group.

In the formula, Y¹ is a single bond, -C(=O)O-, -C(=O)NH-, -OC(=O)-, -NHC(=O)-, -O-, -N(R^{c})-, phenylene, or carbazolylene. Here, R^{c} represents an organic group, and is preferably an alkyl group. The alkyl group is preferably a C₁₋₆ alkyl group, more preferably a C₁₋₃ alkyl group, and even more preferably a methyl group or an ethyl group. The left side of these groups concerning Y¹ is bonded to C, and the right side is bonded to Y².

In one embodiment, Y¹ is -C(=O)O-, -C(=O)NH-, -OC(=O)-, -NHC(=O)-, -O-, -N(R^{c})-, phenylene, or carbazolylene. Here, R^{c} represents an organic group, and is preferably an alkyl group.

Y¹ is preferably -C(=O)O-, -O-, or carbazolylene, more preferably -C(=O)O- or -O-, and even more preferably -C(=O)O-.

In the formula, Y² represents a single bond or a linker, the main chain of which has 1 to 16, preferably 2 to 12, and more preferably 2 to 10 atoms. Here, the main chain means a portion of Y² that connects Y¹ and R³³ by way of the minimum number of atoms.

Examples of Y² include, but are not limited to:
- (CH₂-CH₂-O)ₚ₁- (p1 represents an integer of 1 to 10, preferably an integer of 1 to 6, and more preferably an integer of 1 to 4),
- (CHR^{d})ₚ₂-O- (p2 is an integer of 1 to 40, preferably an integer of 1 to 10, more preferably an integer of 1 to 6, even more preferably an integer of 1 to 4, and even more preferably an integer of 2 to 4, and R^{d} represents hydrogen or a methyl group),
- (CH₂)ₚ₃-O-(CH₂)ₚ₄- (p3 is an integer of 1 to 10, preferably an integer of 1 to 6, and more preferably an integer of 1 to 4, and p4 represents an integer of 0 to 10, preferably an integer from 0 to 6, more preferably an integer of 0 to 4, in one embodiment an integer of 1 to 10, preferably an integer of 1 to 6, and more preferably an integer of 1 to 4),
- (CH₂-CH₂-O)ₚ₅-CO-NH-CH₂-CH₂-O- (p5 represents an integer of 1 to 10),
- (CH₂)ₚ₆- (p6 represents an integer of 1 to 6),
- (CH₂)ₚ₇-O-CONH-(CH₂)ₚ₈- (p7 represents an integer of 1 to 8 and preferably 2 or 4, and p8 represents an integer of 1 to 6 and preferably 3),
- (CH₂)ₚ₉-NHC(=O)O-(CH₂)ₚ₁₀- (p9 represents an integer of 1 to 6 and preferably 3, and p10 represents an integer of 1 to 8 and preferably 2 or 4), and
- O- (provided that Y¹ is not -O-).

Preferable examples of Y² include - (CH₂-CH₂-O) ₚ₁- (p1 represents an integer of 1 to 10), -(CHR^{d})ₚ₂-O- (p2 is an integer of 1 to 40, and R^{d} represents hydrogen or a methyl group), -(CH₂)ₚ₃-O-(CH₂)ₚ₄- (p3 is an integer of 1 to 10, and p4 is an integer of 1 to 10), or -(CH₂)ₚ₇-O-CONH-(CH₂)ₚ₈- (p7 represents an integer of 1 to 8 and preferably 2 or 4, and p8 represents an integer of 1 to 6 and preferably 3). In these groups, the left end is bonded to the molecular backbone side (the Y¹ side) and the right end is bonded to the functional group side (the R³³ side) wherein the functional group is selected from a substituent group A.

R^{4a} is more preferably a group represented by the following formula: 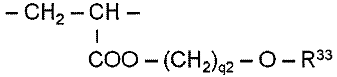 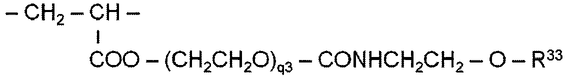 wherein q2 is an integer of 1 to 10, preferably an integer of 1 to 6, more preferably an integer of 1 to 4, and more preferably an integer of 2 to 4, and q3 is an integer of 1 to 10, preferably an integer of 1 to 6, more preferably an integer of 1 to 4, and even more preferably an integer of 1 to 2.

R^{4b} is each independently at each occurrence a divalent organic group not having a crosslinkable group.

R^{4b} is preferably -CHR^{4c}-CR^{4d}R^{4e}-. Here, R^{4c} and R^{4d} each independently represent a hydrogen atom or an alkyl group, and the R^{4e} group is -Y³-R^{4f}. Here, Y³ has the same definition as Y¹, and R^{4f} is an organic group not having a crosslinkable group and is a group to which an R^{4g} group as will be described below is bonded via a linker or directly to Y³.

The linker is preferably:
(a) -(CH₂-CH₂-O)ₛ₁- (s1 represents an integer of 1 to 10, preferably an integer of 1 to 6, and more preferably an integer of 1 to 4),
(b) - (CHR^{4h})ₛ₂-O- (s2 represents the number of repeats that is an integer of 1 to 40, preferably an integer of 1 to 10, more preferably an integer of 1 to 6, more preferably an integer of 1 to 4, and even more preferably an integer of 2 to 4, and R^{4h} represents a hydrogen atom or a methyl group),
(c) -(CH₂)ₛ₃-O-(CH₂)ₛ₄- (s3 is an integer of 1 to 10, preferably an integer of 1 to 6, and more preferably an integer of 1 to 4, and s4 is an integer of 0 to 10, preferably an integer of 0 to 6, more preferably an integer of 0 to 4, and, in one embodiment, represents an integer of 1 to 10, preferably an integer of 1 to 6, and more preferably an integer of 1 to 4),
(d) - (CH₂-CH₂-O) ₛ₁-CO-NH-CH₂-CH₂-O- (s1 is as defined above),
(e) -(CH₂)ₛ₅- (s5 represents an integer of 1 to 6),
(f) - (CH₂)ₛ₆-O-CONH-(CH₂)ₛ₇- (s6 represents an integer of 1 to 8 and preferably 2 or 4, and s7 represents an integer of 1 to 6 and preferably 3), or
(g) -O- (provided that Y³ is not -O-).

R^{4g} is preferably any of the following groups:
(i) an alkyl group
   examples: methyl, ethyl, propyl, isopropyl, butyl, isobutyl, tert-butyl, pentyl, hexyl, heptyl, octyl, dodecyl, octadecyl
(ii) a chain group containing an alkyl group substituted with fluorine
   examples: 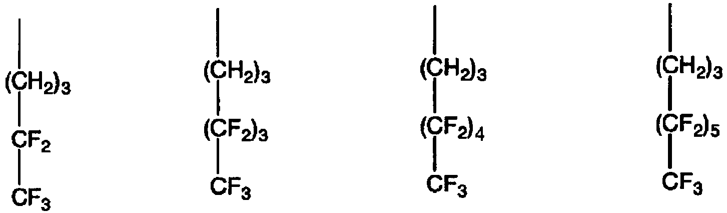 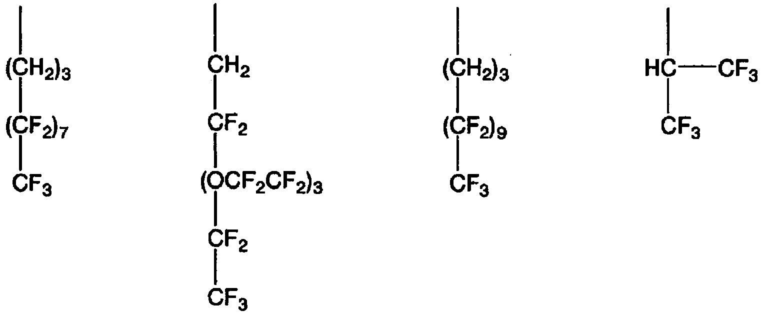 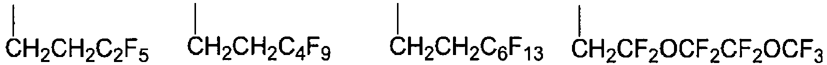 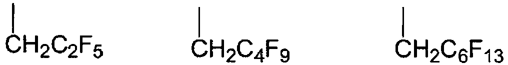 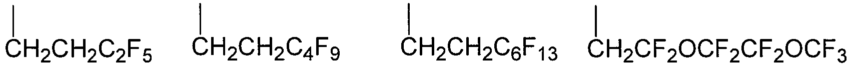 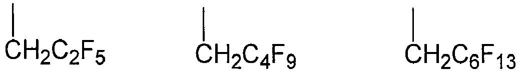
(iii) a group containing one or more cyclic moieties selected from the group consisting of a monocyclic carbocycle, a bicyclic carbocycle, a tricyclic carbocycle, and a tetracyclic carbocycle
   examples: 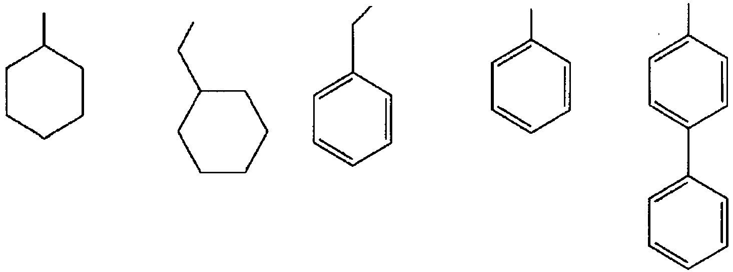 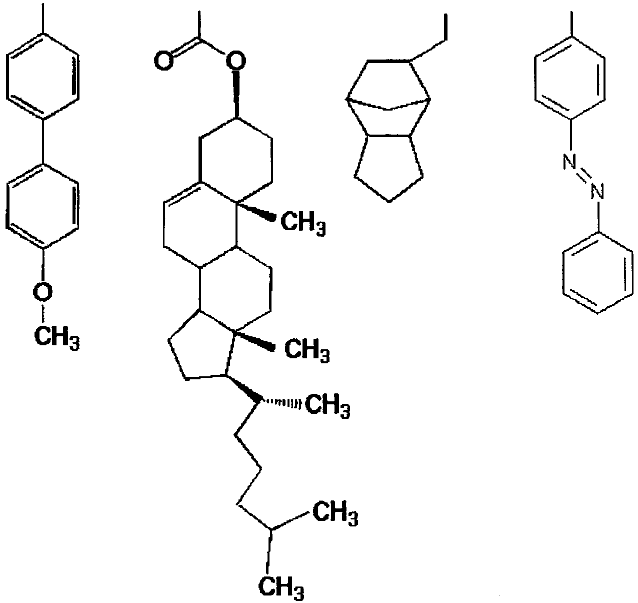
(iv) hydrogen, provided that the hydrogen atom is not bonded to the oxygen atom of the linker
(v) a group containing an imidazolium salt
   examples: 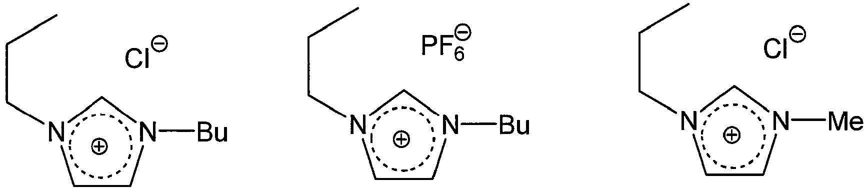 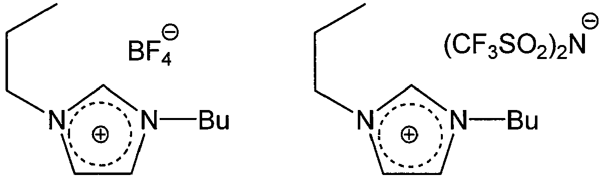 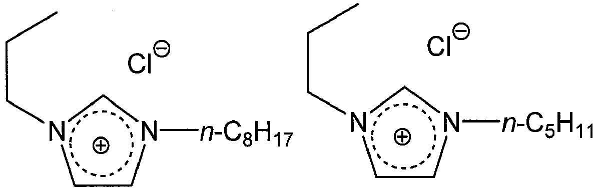
(vi) a group containing silicon 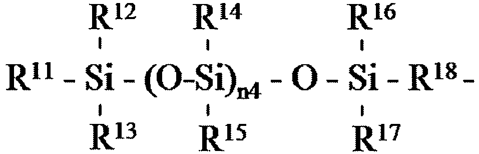 wherein R¹¹, R¹², R¹³, R¹⁴, R¹⁵, R¹⁶, and R¹⁷ each independently represents an alkyl group or an aryl group.

Examples of the alkyl group include, but are not limited to, an alkyl group having 1 to 10 carbon atoms and a cycloalkyl group having 3 to 20 carbon atoms, preferably an alkyl group having 1 to 6 carbon atoms, and specifically a n-butyl group for R¹¹ and a methyl group for R¹² to R¹⁷.

Examples of the aryl group include, but are not limited to, aryl groups having 6 to 20 carbon atoms. Such an aryl group may contain 2 or more rings. A preferable aryl group is a phenyl group.

The alkyl group and the aryl group may contain a heteroatom such as a nitrogen atom, an oxygen atom, or a sulfur atom in their molecular chain or ring, if desired.

Moreover, the alkyl group and the aryl group may be substituted with one or more substituents selected from halogen; and a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5 to 10-membered heterocyclyl group, a 5 to 10-membered unsaturated heterocyclyl group, a C₆₋₁₀ aryl group, and a 5 to 10-membered heteroaryl group, each optionally substituted with one or more halogen atoms, if desired.

In the formula, R¹⁸ represents a divalent organic group.

R¹⁸ is preferably -(CH₂)_{r"}- (wherein r" is an integer of 1 or more and 20 or less, and preferably an integer of 1 or more and 10 or less), and more preferably -(CH₂)_{r"}- (wherein r" is an integer of 1 or more and 10 or less).

In the formula, n4 is each independently an integer of 1 or more and 500 or less. n4 is preferably 1 or more and 200 or less, and more preferably 10 or more and 200 or less.

R^{4g} is more preferably a hydrogen atom (excluding hydrogen bonded to O to form a hydroxyl group) or an alkyl group that may be fluorinated and bonded via an ethylene chain or an oxyethylene chain, more preferably a hydrogen atom, a methoxyethyl group, an isobutyl group, or R⁴ⁱ-CF₂-(CF₂)ₛ₆-(CH₂)ₛ₇-O-(CH₂)₂- (R⁴ⁱ is a fluorine atom or a hydrogen atom, s6 is an integer of 0 to 6, and s7 is an integer of 1 to 6), and even more preferably a 3-(perfluoroethyl)propoxyethyl group [rational formula: CF₃-(CF₂)-(CH₂)₃-O-(CH₂)₂-].

In R⁴, the structural unit R^{4a} and the structural unit R^{4b} may each form a block or may be randomly bonded.

In one embodiment, in R⁴, the structural unit R^{4a} and the structural unit R^{4b} each form a block.

In one embodiment, in R⁴, the structural unit R^{4a} and the structural unit R^{4b} are randomly bonded.

In one embodiment, R⁴ is R^{4a}. That is to say, R⁴ consists of a structural unit R^{4a} that has a crosslinkable group.

In a preferable embodiment, the number of R^{4a} (the degree of polymerization) is 1 to 90, preferably 1 to 80, more preferably 2 to 70, and even more preferably 3 to 60.

In one embodiment, R⁴ is R^{4b}. That is to say, R⁴ consists of a structural unit R^{4b} that does not have a crosslinkable group.

In a preferable embodiment, the number of R^{4b} (the degree of polymerization) is 1 to 90, preferably 1 to 80, more preferably 2 to 70, and even more preferably 3 to 60.

In the formula, n is an integer of 1 to 90, preferably an integer of 1 to 80, more preferably 2 to 80, even more preferably an integer of 2 to 70, and yet more preferably an integer of 3 to 60.

In the formulae (1) and (2), X^{a} is each independently a divalent organic group.

In the formulae (1) and (2), X^{b} is each independently a divalent organic group.

In the formulae, -X^{a}-X^{b} - is understood as a part of the linker connecting Si and R⁴ in the silicone copolymers represented by formulae (1) and (2). Accordingly, X^{a} and X^{b} may be any divalent organic group as long as the compounds represented by the formulae (1) and (2) can stably exist.

In one embodiment, X^{a} may be a group represented by:

- (O)ₑ₁-(CH₂)_{g2}-O-[(CH₂)_{g3}-O-]_{g4}

wherein
e1 is 0 or 1,
g2 and g3 are each independently an integer of 1 to 10, preferably an integer of 2 to 8, more preferably an integer of 2 to 6, and even more preferably an integer of 2 to 4, and
g4 is 0 or 1.
The left end of this group is bonded to Si, and the right end is bonded to X^{b}.

In a preferable embodiment, X^{a} may be a group represented by:

- (CH₂)_{g2}-O-(CH₂)_{g3}-O-

wherein
g2 is an integer of 1 to 10, an integer of preferably 2 to 8, more preferably an integer of 2 to 6, and even more preferably an integer of 2 or 4, such as 3, and,
g3 is an integer of 1 to 10, preferably an integer of 2 to 8, more preferably an integer of 2 to 6, and even more preferably an integer of 2 or 4, such as 2.
The left end of this group is bonded to Si, and the right end is bonded to X^{b}.

In the formulae, X^{b} is each independently a divalent organic group.

In one embodiment, X^{b} may be a group represented by the following formula:

-CO-R^{b3}-CR^{b1}R^{b2}-

wherein
R^{b1} and R^{b2} are each independently a hydrogen atom, a C₁₋₃ alkyl group, a phenyl group, or -CN; and
R^{b3} is a single bond or an optionally substituted C₁₋₆ alkylene group. The left end of this group is bonded to X^{a}, and the right end is bonded to R⁴.

R^{b1} and R^{b2} are each independently preferably a C₁₋₃ alkyl group, a phenyl group, or -CN, and more preferably a C₁₋₃ alkyl group or -CN. The C₁₋₃ alkyl group is preferably a methyl group or an ethyl group, and more preferably a methyl group.

In one embodiment, R^{b1} is a C₁₋₃ alkyl group and preferably a methyl group, and R^{b2} is a hydrogen atom or - CN.

The substituent in the "optionally substituted C₁₋₆ alkylene group" in R^{b3} is preferably a C₁₋₃ alkyl group or a phenyl group, and preferably a C₁₋₃ alkyl group. The C₁₋₃ alkyl group is preferably a methyl group or an ethyl group, and more preferably a methyl group. There may be one substituent, or may be two or more.

The C₁₋₆ alkylene group in R^{b3} may preferably be a C₁₋₃ alkylene group, and more preferably a C₂₋₃ alkylene group, such as a dimethylene group.

In one embodiment, R^{b3} is a single bond.

In another embodiment, R^{b3} is an optionally substituted C₁₋₆ alkylene group, and preferably a C₁₋₆ alkylene group.

In the formula, R^{a} is alkyl, phenyl, -SR^{a1}, -OR^{a2}, -NR^{a3}₂, 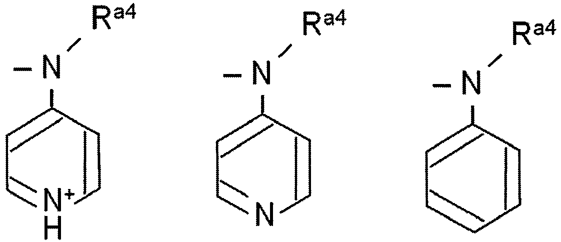 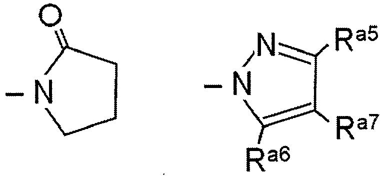 . R^{a} may be part of a so-called RAFT agent.

In the formula, R^{a1}, R^{a2}, R^{a3}, R^{a4}, R^{a5}, and R^{a6} are each independently an alkyl group or a phenyl group.

R^{a1} is preferably a C₁₋₂₀ alkyl group, more preferably a C₃₋₁₈ alkyl group, and even more preferably a C₄₋₁₂ alkyl group.

R^{a2} is preferably a phenyl group or a C₁₋₂₀ alkyl group. The C₁₋₂₀ alkyl group is preferably a C₁₋₁₀ alkyl group, more preferably a C₁₋₆ alkyl group, and even more preferably a C₁₋₃ alkyl group.

R^{a3} is preferably a C₁₋₂₀ alkyl group, more preferably a C₁₋₁₀ alkyl group, even more preferably a C₁₋₆ alkyl group, and yet more preferably a C₁₋₃ alkyl group.

R^{a4} is preferably a C₁₋₆ alkyl group, more preferably a C₁₋₃ alkyl group, and even more preferably a methyl group.

R^{a5} is preferably a C₁₋₆ alkyl group, more preferably a C₁₋₃ alkyl group, and even more preferably a methyl group.

R^{a6} is preferably a C₁₋₆ alkyl group, more preferably a C₁₋₃ alkyl group, and even more preferably a methyl group.

R^{a7} is a hydrogen atom or a halogen atom (such as fluorine, chlorine, bromine, or iodine, and preferably chlorine).

In one embodiment, R^{a} is -SR^{a1} or -OR^{a2}.

The number average molecular weight of the silicone copolymer of the present disclosure may be, but is not limited to, 2 × 10² to 1 × 10⁵, preferably 1 × 10³ to 5 × 10⁴, and more preferably 1 × 10³ to 2 × 10⁴. The number average molecular weight can be determined by gel permeation chromatography (GPC).

The silicone copolymer of the present disclosure is hydrophobic. Here, being "hydrophobic" means that the silicone copolymer is soluble in a non-aqueous solvent in a concentration of 5% by mass or more. The non-aqueous solvent may be, for example, methyl isobutyl ketone, methyl ethyl ketone, or butyl acetate.

In a preferable embodiment, the silicone copolymer of the present disclosure is soluble in methyl isobutyl ketone in a concentration of 5% by mass or more, preferably 10% by mass or more, and more preferably 20% by mass or more.

In a more preferable embodiment, the silicone copolymer of the present disclosure is soluble in methyl isobutyl ketone and methyl ethyl ketone in a concentration of 5% by mass or more, preferably 10% by mass or more, and more preferably 20% by mass or more.

The silicone copolymer of the present disclosure can be synthesized by utilizing, for example, so-called reversible addition-fragmentation chain transfer (RAFT) type radical polymerization.

First, a RAFT agent having a siloxane group is prepared. For example, a compound (A) having a RAFT skeleton (-SC(=S)-) and a compound (B1) or (B2) having a siloxane group: 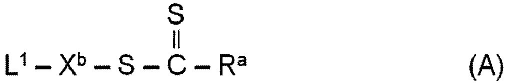 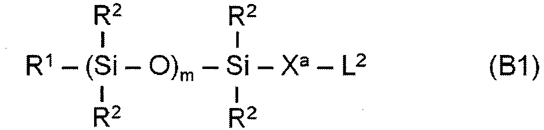 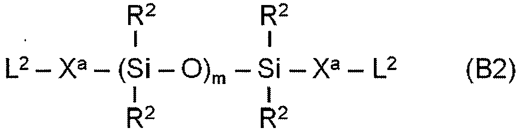 [wherein R^{a}, R¹, R², X^{a}, X^{b}, and m are as defined above; and
L¹ and L² are each a moiety to be removed] may be reacted to obtain a chain transfer agent (1a) or (2a) having a siloxane group: 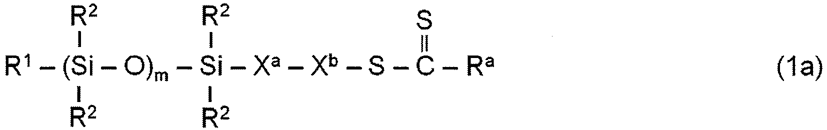 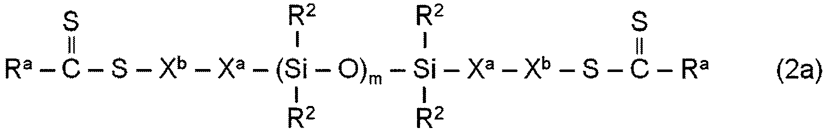 [wherein R^{a}, R¹, R², X^{a}, X^{b}, and m are as defined above] .

The chain transfer agent (1a) or (2a) obtained as described above may be reacted with a monomer having an unsaturated bond to obtain the compound represented by the formula (1) or (2). Such a reaction is so-called RAFT polymerization, and as the reaction condition, conditions generally used in RAFT polymerization can be used.

Next, a surface-treating agent containing the silicone copolymer represented by the general formula (1) or (2) will now be described.

The silicone copolymer of the present disclosure is preferably used to treat the surface of substrates that are made of various materials including resins. That is to say, the present disclosure provides a surface-treating agent containing one or more silicone copolymers represented by the formula (1) or (2) .

In addition to the components described above, the surface-treating agent of the present disclosure may contain other components such as a fluorine-containing oil (C), a silicone oil, an active energy ray radical curing initiator, a thermal acid generator, and an active energy ray cationic curing initiator.

As the fluorine-containing oil, at least one fluorine-containing oil represented by the following general formula (C) :

Rf²-(OC₄F₈)_{a'}-(OC₃F₆)_{b'}-(OC₂F₄)_{c'}-(OCF₂)_{d'}-Rf³ ··· (C)

(hereinafter also referred to as a "fluorine-containing oil (C)") may be contained.

In the formula (C), Rf² represents an alkyl group that has 1 to 16 carbon atoms and that is optionally substituted with one or more fluorine atoms, and Rf³ represents a hydrogen atom, a fluorine atom, or an alkyl group that has 1 to 16 carbon atoms and that is optionally substituted with one or more fluorine atoms. Preferably, Rf² and Rf³ are each independently an alkyl group that has 1 to 3 carbon atoms and that is optionally substituted with one or more fluorine atoms, and more preferably a perfluoroalkyl group having 1 to 3 carbon atoms.

In the formula (C), a', b', c' and d' represent the numbers of three repeating units in perfluoro(poly)ether constituting the main backbone of the polymer, respectively, and are mutually independently an integer of 0 or more and 300 or less and preferably an integer of 0 or more and 200 or less, and the sum of a', b', c', and d' is at least 1 and preferably 1 to 300. The occurrence order of the respective repeating units enclosed in parentheses provided with a subscript a', b', c', or d' is not limited in the formula. Among these repeating units, -(OC₄F₈)- may be any of - (OCF₂CF₂CF₂CF₂)-, -(OCF(CF₃)CF₂CF₂)-, -(OCF₂CF(CF₃)CF₂)-, - (OCF₂CF₂CF(CF₃))-, -(OC(CF₃)₂CF₂)-, -(OCF₂C(CF₃)₂)-, - (OCF(CF₃)CF(CF₃))-, -(OCF(C₂F₅)CF₂)-, and -(OCF₂CF(C₂F₅))-, and is preferably -(OCF₂CF₂CF₂CF₂)-. - (OC₃F₆)- may be any of -(OCF₂CF₂CF₂)-, - (OCF(CF₃)CF₂)-, and -(OCF₂CF(CF₃))-, and preferably -(OCF₂CF₂CF₂)-. -(OC₂F₄)- may be any of -(OCF₂CF₂)- and - (OCF (CF₃))-, and preferably -(OCF₂CF₂)-.

Examples of the fluorine-containing oil represented by the general formula (C) include compounds represented by any one of the following general formulae (C1) and (C2) (the fluorine-containing oil may be a single compound or a mixture of two or more compounds):

Rf²-(OCF₂CF₂CF₂)_{b"}-Rf³ ... (C1)

wherein Rf² and Rf³ are as described above, b" is an integer of 0 to 300, and the occurrence order of the respective repeating units enclosed in parentheses provided with a subscript b" is not limited in the formula;

Rf²-(OCF₂CF₂CF₂CF₂)_{a"}- (OCF₂CF₂CF₂)_{b"}- (OCF₂CF₂)_{c"}- (OCF₂)_{d"}-Rf³ ... (C2)

wherein Rf² and Rf³ are as described above, a" and b" are each independently an integer of 0 to 30, c" and d" are each independently an integer of 0 to 300, and the occurrence order of the respective repeating units enclosed in parentheses provided with a subscript a", b", c", or d" is not limited in the formula.

The fluorine-containing oil (C) may have an average molecular weight of about 1,000 to 30,000. Accordingly, high surface lubricity can be obtained.

In the curable composition of the present disclosure, the fluorine-containing oil (C) may be contained in an amount of, for example, 0 to 80 parts by mass and preferably 0 to 40 parts by mass based on total 100 parts by mass of the silicone copolymer (in the case of two or more, the total thereof, and the same also applies below).

In the curable composition of the present disclosure, the fluorine-containing oil (C) may be contained in an amount of preferably 40% by mass or less based on the total of the silicone copolymer and the fluorine-containing oil (C).

The fluorine-containing oil (C) contributes to increasing the surface lubricity of the surface-treating layer.

For example, a linear or cyclic silicone oil having 2,000 or less siloxane bonds can be used as the silicone oil. The linear silicone oil may be a so-called straight silicone oil or modified silicone oil. Examples of the straight silicone oil include dimethyl silicone oil, methyl phenyl silicone oil, and methyl hydrogen silicone oil. Examples of the modified silicone oil include those obtained by modifying a straight silicone oil with polyether, higher fatty acid ester, fluoroalkyl, amino, epoxy, carboxyl, alcohol, or the like. Examples of the cyclic silicone oil include cyclic dimethylsiloxane oil.

In the surface-treating agent of the present disclosure, the silicone oil may be contained in an amount of, for example, 0 to 50 parts by mass and preferably 0 to 10 parts by mass based on total 100 parts by mass of the silicone copolymer (in the case of two or more, the total thereof, and the same also applies below).

The active energy ray radical curing initiator, for example, generates radicals only when being irradiated with electromagnetic waves in a wavelength region of 350 nm or less, i.e., ultraviolet rays, electron beams, X-rays, y-rays, or the like, and functions as a catalyst that initiates curing (a crosslinking reaction) of the curable site (for example, a carbon-carbon double bond) of the silicone copolymer, and usually those that generate radicals with ultraviolet rays are used.

The active energy ray radical curing initiator in the surface-treating agent of the present disclosure is suitably selected according to the type of curable site in the silicone copolymer, the type of active energy ray to be used (the wavelength range or the like), the irradiation intensity, or the like, and generally, the following can be exemplified as initiators for curing the silicone copolymer having a radically reactive curable site (a carbon-carbon double bond) using active energy rays in the ultraviolet region.
- Acetophenones
   acetophenone, chloroacetophenone, diethoxyacetophenone, hydroxyacetophenone, α-aminoacetophenone, hydroxypropiophenone, 2-methyl-1-[4-(methylthio)phenyl]-2-morpholinopropan-1-one, and the like.
- Benzoins
   benzoin, benzoin methyl ether, benzoin ethyl ether, benzoin isopropyl ether, benzoin isobutyl ether, benzyl dimethyl ketal, and the like.
- Benzophenones
   benzophenone, benzoylbenzoic acid, methyl benzoylbenzoate, 4-phenylbenzophenone, hydroxybenzophenone, hydroxy-propylbenzophenone, acrylated benzophenone, Michler's ketone, and the like.
- Thioxanthones
   thioxanthone, chlorothioxanthone, methylthioxanthone, diethylthioxanthone, dimethylthioxanthone, and the like.
- Others
   benzyl, α-acyloxime ester, acylphosphine oxide, glyoxyester, 3-ketocoumarin, 2-ethylanthraquinone, camphorquinone, anthraquinone, and the like.

One of these active energy ray curing initiators may be used singly, or two or more may be used in combination.

The active energy ray curing initiator is not limited, and is contained in an amount of 0.01 to 10,000 parts by mass, and preferably 0.1 to 5,000 parts by mass, based on 100 parts by mass of the silicone copolymer.

By using the thermal acid generator, decomposition reaction of the compound containing a cationic species is caused by heat, and curing (a crosslinking reaction) of the curable site (for example, a cyclic ether) of the silicone copolymer having the curable site is initiated.

The thermal acid generator is suitably, for example, a compound represented by the following general formula (a):

(R¹ₐR²_{b}R³_{c}R⁴_{d}Z)^{+m}(AXₙ)^{-m} (a)

wherein Z represents at least one element selected from the group consisting of S, Se, Te, P, As, Sb, Bi, O, N, and halogen elements; R¹, R², R³, and R⁴ are the same or different and represent an organic group; a, b, c, and d are 0 or a positive number, and the total of a, b, c, and d is equal to the valence of Z; the cation (R¹ₐR²_{b}R³_{c}R⁴_{d}Z)^{+m} represents an onium salt; A represents a metal element or a metalloid element which is the central atom of a halide complex, and is at least one selected from the group consisting of B, P, As, Al, Ca, In, Ti, Zn, Sc, V, Cr, Mn, and Co; X represents a halogen element; m is the net charge of a halide complex ion; and n is the number of halogen elements in the halide complex ion.

Specific examples of the anion (AXₙ)^{-m} of the general formula (a) include tetrafluoroborate (BF₄-), hexafluorophosphate (PF₆⁻), hexafluoroantimonate (SbF₆⁻), hexafluoroarsenate (AsF₆⁻), and hexachloroantimonate (SbCl₆⁻). Further, anions represented by the general formula AXn(OH)⁻can also be used. Examples of other anions include perchlorate ion (ClO₄⁻), trifluoromethylsulfite ion (CF₃SO₃⁻), fluorosulfonate ion (FSO₃⁻), toluenesulfonate ion, and trinitrobenzenesulfonate ion.

Specific examples of commercial products of the thermal acid generator include diazonium salts such as AMERICURE series (manufactured by American Can Company), ULTRASE T series (manufactured by Adeka Corporation), and WPAG series (manufactured by Wako Pure Chemical Company); iodonium salts such as UVE series (manufactured by General Electric Company), FC series (manufactured by 3M), UV9310C (manufactured by GE Toshiba Silicones Ltd.), Photoinitiator 2074 (manufactured by Rhone-Poulenc), and WPI series (manufactured by Wako Pure Chemical Company); and sulfonium salts such as CYRACURE series (manufactured by Union Carbide Corporation), UVI series (manufactured by General Electric Company), FC series (manufactured by 3M), CD series (manufactured by Sartomer), Optomer SP series and Optomer CP series (manufactured by Adeka Corporation), San Aid SI series (manufactured by Sanshin Chemical Industry Co., Ltd.), CI series (manufactured by Nippon Soda Co., Ltd.), WPAG series (manufactured by Wako Pure Chemical Company), and CPI series (manufactured by San-Apro Ltd.).

One of these thermal acid generators may be used singly, or two or more may be used in combination.

The thermal acid generator is contained in an amount of, but not limited to, 0.01 to 10,000 parts by mass, and preferably 0.1 to 5,000 parts by mass, based on 100 parts by mass of the silicone copolymer.

By using the active energy ray cationic curing initiator, a compound containing a cationic species is excited by light to cause a photodecomposition reaction, thereby initiating curing (a crosslinking reaction) of the curable site (for example, a cyclic ether) of the silicone copolymer having the curable site.

Suitable examples of the active energy ray cationic curing initiator include triphenylsulfonium hexafluoroantimonate, triphenylsulfonium phosphate, p-(phenylthio)phenyldiphenylsulfonium hexafluoroantimonate, p-(phenylthio)phenyldiphenylsulfonium hexafluorophosphate, 4-chlorophenyldiphenylsulfonium hexafluorophosphate, 4-chlorophenyldiphenylsulfonium hexafluoroantimonate, bis[4-(diphenylsulfonio)phenyl]sulfide bishexafluorophosphate, bis[4-(diphenylsulfonio)phenyl]sulfide bishexafluoroantimonate, (2,4-cyclopentadien-1-yl)[(1-methylethyl)benzene]-Fe-hexafluorophosphate, and diaryliodonium hexafluoroantimonate.

Specific examples of commercial products of the active energy ray cationic curing initiator preferably include diazonium salt, iodonium salt, and sulfonium salt products such as UVI-6950, UVI-6970, UVI-6974, and UVI-6990 (manufactured by Union Carbide Corporation); Adeca Optomer SP-150, SP-151, SP-170, and SP-172 (manufactured by ADEKA CORPORATION); Irgacure 250 (manufactured by Ciba Japan); CI-2481, CI-2624, CI-2639, and CI-2064 (manufactured by Nippon Soda Co., Ltd.); CD-1010, CD-1011, and CD-1012 (manufactured by Sartomer Company Inc.); DTS-102, DTS-103, NAT-103, NDS-103, TPS-103, MDS-103, MPI-103, and BBI-103 (manufactured by Midori Kagaku Co., Ltd.); PCI-061T, PCI-062T, PCI-020T, and PCI-022T (manufactured by Nippon Kayaku Co., Ltd.); CPI-100P, CPT-101A, and CPI-200K (manufactured by San-Apro Ltd.); San-Aid SI-60L, San-Aid SI-80L, San-Aid SI-100L, San-Aid ST-110L, San-Aid SI-145, San-Aid SI-150, San-Aid SI-160, and San-Aid SI-180L (manufactured by Sanshin Chemical Industry Co., Ltd.); and WPAG series (manufactured by Wako Pure Chemical Industries, Ltd.).

One of these active energy ray cationic curing initiator may be used singly, or two or more may be used in combination.

The active energy ray curing initiator is contained in an amount of, but not limited to, 0.01 to 10,000 parts by mass, and preferably 0.1 to 5,000 parts by mass, based on 100 parts by mass of the silicone copolymer.

The surface-treating agent of the present disclosure may contain a solvent. A fluorine-containing organic solvent and a fluorine-free organic solvent can be used as solvents.

Examples of such fluorine-containing organic solvents include perfluorohexane, perfluorooctane, perfluorodimethyl cyclohexane, perfluorodecalin, perfluoroalkyl ethanol, perfluorobenzene, perfluorotoluene, perfluoroalkyl amine (e.g., Fluorinert (trade name)), perfluoroalkyl ether, perfluorobutyl tetrahydrofuran, polyfluoroaliphatic hydrocarbons (ASAHIKLIN AC6000 (trade name)), hydrochlorofluorocarbons (e.g., ASAHIKLIN AK-225(trade name)), hydrofluoroether (e.g., Novec (trade name), HFE-7100 (trade name)), 1,1,2,2,3,3,4-heptafluorocyclopentane, fluorine-containing alcohols, perfluoroalkyl bromide, perfluoroalkyl iodide, perfluoropolyether (e.g., Krytox (trade name), Demnum (trade name), Fomblin (trade name)), 1,3-bistrifluoromethylbenzene, 2-(perfluoroalkyl)ethyl methacrylate, 2-(perfluoroalkyl)ethyl acrylate, perfluoroalkyl ethylene, chlorofluorocarbon 134a, and hexafluoropropene oligomers.

Examples of such fluorine-free organic solvents include acetone, methyl isobutyl ketone, cyclohexanone, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether pentane, hexane, heptane, octane, dichloromethane, chloroform, carbon tetrachloride, dichloroethane, carbon disulfide, benzene, toluene, xylene, nitrobenzene, diethyl ether, dimethoxyethane, diglyme, triglyme, ethyl acetate, butyl acetate, dimethylformamide, dimethyl sulfoxide, 2-butanone, acetonitrile, benzonitrile, butanol, 1-propanol, 2-propanol, ethanol, methanol, and diacetone alcohol.

Among them, the solvent used in the surface-treating agent of the present invention is preferably, methyl isobutyl ketone, propylene glycol monomethyl ether, hexadecane, butyl acetate, acetone, 2-butanone, cyclohexanone, ethyl acetate, diacetone alcohol, or 2-propanol.

One of these solvents may be used singly, or two or more may be used in combination.

The solvent is contained in an amount of 5 to 1,000,000 parts by mass, and preferably 5 to 500,000 parts by mass, based on 100 parts by mass of the silicone copolymer.

In one embodiment, the surface-treating agent of the present disclosure can be added to a matrix-forming composition to form a curable composition.

The curable composition contains the silicone copolymer or the surface-treating agent of the present disclosure in an amount of 0.001 to 20% by mass, preferably 0.001 to 10% by mass, and more preferably 0.01 to 10% by mass.

The matrix-forming composition means a composition containing a compound having at least one carbon-carbon double bond, such as a compound which is monofunctional and/or polyfunctional acrylate and methacrylate (hereinafter, acrylate and methacrylate are also collectively referred to as "(meth)acrylate"), monofunctional and/or polyfunctional urethane (meth)acrylate, or monofunctional and/or polyfunctional epoxy (meth)acrylate, although not limited thereto. Examples of the matrix-forming composition include, but are not limited to, a composition generally used as a hard coating agent or an antireflection agent, such as a hard coating agent containing a polyfunctional (meth)acrylate or an antireflection agent containing a fluorine-containing (meth)acrylate. The hard coating agent is commercially available, e.g., as Beam Set 502H, 504H, 505A-6, 550B, 575CB, 577, 1402 (trade name) from Arakawa Chemical Industry Co., Ltd.; as EBECRYL40 (trade name) from Daicel Cytec company; and as HR300 series (trade name) from Yokohama Rubber Co., Ltd. The antireflection agent is commercially available, e.g., as Optool AR-110 (trade name) from Daikin Industries, Ltd.

The matrix-forming composition is also preferably a composition containing a compound which is a monofunctional and/or polyfunctional epoxy. For example, epoxy compounds such as bisphenol A diglycidyl ether, 2,2'-bis(4-glycidyloxycyclohexyl)propane, 3,4-epoxycyclohexylmethyl-3,4-epoxycyclohexanecarboxylate, vinylcyclohexenedioxide, 2-(3,4-epoxycyclohexyl)-5,5-spiro-(3,4-epoxycyclohexane)-1,3-dioxane, bis(3,4-epoxycyclohexyl)adipate, 1,2-cyclopropanedicarboxylic acid bisglycidyl ester, and triglycidyl isocyanurate can be used. As described above, also usable are hydrogenated epoxy resins, alicyclic epoxy resins, epoxy resins containing isocyanurate rings, bisphenol A type epoxy resins, bisphenol F type epoxy resins, phenol novolac type epoxy resins, cresol novolac type epoxy resins, naphthalene type epoxy resins, biphenyl type epoxy resins, phenol aralkyl type epoxy resins, biphenyl aralkyl type epoxy resins, hydrogenated epoxy resins obtained by hydrogenating aromatic rings of the various epoxy resins, and dicyclopentadiene type epoxy resins.

The surface-treating agent and the curable composition of the present disclosure may further contain any of additives such as antioxidants, thickening agents, leveling agents, antifoaming agents, antistatic agents, antifogging agents, ultraviolet absorbers, pigments, dyes, inorganic fine particles such as silica, fillers such as aluminum paste, talc, glass frit, and metal powder, and polymerization inhibitors such as butylated hydroxytoluene (BHT) and phenothiazine (PTZ).

Next, an article of the present disclosure will be described.

The present disclosure provides an article comprising a substrate and a layer (a surface-treating layer) formed on a surface of the substrate from the surface-treating agent or the curable composition of the present disclosure (hereinafter, the surface-treating agent and the curable composition of the present disclosure are also collectively referred to as a "surface-treating composition"). The article can be produced, for example, as follows.

First, a substrate is provided. The substrate usable in the present disclosure may be composed of any suitable material such as glass, resin (which may be natural or synthetic resin such as a commonly used plastic material, preferably polycarbonate resin, poly(meth)acrylate resin, polyethylene terephthalate resin, triacetyl cellulose resin, polyimide resin, modified (transparent) polyimide resin, polycycloolefin resin, and polyethylene naphthalate resin; and may be in form of a plate, a film, or others), metal (may be a simple substance of metal such as aluminum, copper, silver, or iron, or a complex such as alloy or the like), ceramic, a semiconductor (silicon, germanium, or the like), fiber (fabric, non-woven fabric, or the like), fur, leather, wood, pottery, stone, a building material, or the like.

For example, when the article to be produced is an optical member, the material constituting the surface of the substrate may be a material for an optical member, such as glass or transparent plastic. The substrate, according to its specific specifications or the like, may have an insulating layer, an adhesive layer, a protecting layer, a decorated frame layer (I-CON), an atomizing film layer, a hard coating layer, a polarizing film, a phase difference film, an organic EL display module, a liquid crystal display module, or the like.

The shape of the substrate is not limited. The surface region of the substrate on which a surface-treating layer is to be formed is at least a part of the substrate surface, and may be suitably determined according to the application, specific specifications, and the like of an article to be produced.

Then, a film of the surface-treating composition of the present disclosure is formed on the surface of the substrate, this film is post-treated as necessary, and thereby a surface-treating layer is formed from the surface-treating composition of the present disclosure.

The film of the surface-treating composition of the present disclosure can be formed by applying the surface-treating composition to the surface of the substrate such that the composition coats the surface. The coating method is not limited. For example, a wet coating method can be used.

Examples of the wet coating method include dip coating, spin coating, flow coating, spray coating, roll coating, gravure coating, micro-gravure coating, bar coating, die coating, screen printing, and similar methods.

When using the wet coating method, the surface-treating composition of the present disclosure can be applied to the substrate surface after being diluted with a solvent. The fluorine-containing organic solvent and the fluorine-free organic solvent described above can be used as solvents. From the viewpoint of the stability of the surface-treating composition of the present disclosure and the volatility of solvents, following solvents are preferably used: a perfluoroaliphatic hydrocarbon having 5 to 12 carbon atoms (for example, perfluorohexane, perfluoromethylcyclohexane, and perfluoro-1,3-dimethylcyclohexane); polyfluoroaromatic hydrocarbons (for example, bis(trifluoromethyl)benzene); polyfluoroaliphatic hydrocarbon; cellosolve solvents such as hydrofluoroether (HFE) (for example, alkyl perfluoroalkyl ethers such as perfluoropropyl methyl ether (C₃F₇OCH₃), perfluorobutyl methyl ether (C₄F₉OCH₃), perfluorobutyl ethyl ether (C₄F₉OC₂H₅), perfluorohexyl methyl ether (C₂F₅CF (OCH₃) C₃F₇) (perfluoroalkyl group and alkyl group may be linear or branched)), hydrochlorofluorocarbon (e.g., ASAHIKLIN AK-225 (trade name)), methyl cellosolve, ethyl cellosolve, methyl cellosolve acetate, and ethyl cellosolve acetate; ester solvents such as diethyl oxalate, ethyl pyruvate, ethyl-2-hydroxybutyrate, ethyl acetoacetate, ethyl acetate, butyl acetate, amyl acetate, ethyl butyrate, butyl butyrate, methyl lactate, ethyl lactate, methyl 3-methoxypropionate, ethyl 3-methoxypropionate, methyl 2-hydroxyisobutyrate, and ethyl 2-hydroxyisobutyrate; propylene glycol solvents such as propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, and dipropylene glycol dimethyl ether; ketone solvents such as acetone, methyl ethyl ketone, methyl isobutyl ketone, 2-hexanone, cyclohexanone, methyl amino ketone, and 2-heptanone; alcohol solvents such as methanol, ethanol, propanol, isopropanol, butanol, and diacetone alcohol; and aromatic hydrocarbons such as toluene and xylene. One of these solvents may be used singly, or two or more may be used as a mixture. Among them, hydrofluoroether, glycol solvents, ester solvents, ketone solvents, and alcohol solvents are preferable, and perfluorobutyl methyl ether (C₄F₉OCH₃) and/or perfluorobutyl ethyl ether (C₄F₉OC₂H₅), propylene glycol monomethyl ether, ethyl acetate, butyl acetate, propylene glycol monomethyl ether acetate, methyl ethyl ketone, methyl isobutyl ketone, isopropanol, butanol, and diacetone alcohol are particularly preferable.

The film is then post-treated. This post-treatment is not limited, and is performed by, for example, applying active energy rays such as electromagnetic waves in a wavelength region of 350 nm or less, such as ultraviolet rays, electron beams, X-rays, γ-rays, and the like. Alternatively, the post-treatment is performed by heating for a predetermined period of time. By performing such post-treatment, curing of the curable site of the silicone copolymer having the curable site and, if present, the curable site of the matrix-forming composition is initiated, and bonds are formed between these compounds and between these compounds and the substrate.

In the above-described manner, a film (i.e., a surface-treating layer) is formed from the surface-treating composition of the present disclosure on the substrate surface, and thus the article of the present disclosure is produced. The surface-treating layer thus obtained has both high surface lubricity (or lubricity, such as grime removability by wiping of grime such as fingerprints and the like, and excellent tactile sensations to the fingers) and high friction durability. Moreover, this surface-treating layer may have not only high friction durability and surface lubricity but also have, depending on the formulation of the surface-treating composition used, water-repellency, oil-repellency, antifouling properties (e.g., preventing grime such as fingerprints from adhering), and the like, and may be suitably used as a functional thin film.

The coefficient of static friction of the film formed from the surface-treating composition of the present invention is preferably 1.5 or less, more preferably 1.0 or less, and even more preferably 0.6 or less.

The coefficient of dynamic friction of the film formed from the surface-treating composition of the present invention is preferably 0.43 or less, more preferably 0.41 or less, and even more preferably 0.40 or less.

The coefficient of static friction and the coefficient of dynamic friction can be measured using a friction tester ("Tribomaster TL201Ts, manufactured by Trinity-Lab Inc.) or the like, and using a tactile contact as a friction block, under a load of 20 gf at a scanning rate of 10 mm/sec.

The present disclosure further relates to an optical material having the surface-treating layer as the outermost layer.

The optical material preferably includes a wide variety of optical materials in addition to optical materials relating to displays and the like as exemplified below: for example, displays such as cathode ray tubes (CRTs; e.g., TV, PC monitors), liquid crystal displays, plasma displays, organic EL displays, inorganic thin-film EL dot matrix displays, rear projection displays, vacuum fluorescent displays (VFDs), field emission displays (FEDs); or protective plates or films for such displays; or those obtained by performing an antireflection film treatment on their surfaces.

In one embodiment, the article having a surface-treating layer obtained according to the present disclosure may be, but is not limited to, an optical member. Examples of the optical member include lenses of glasses or the like; front surface protective plates, anti-scattering films, antireflection plates, polarizing plates, and anti-glare plates for displays such as PDPs and LCDs; touch panel sheets for devices such as mobile phones and personal digital assistants; disc surfaces of optical discs such as Blu-ray (registered trademark) discs, DVD discs, CD-Rs, and MOs; and optical fibers.

In one embodiment, examples of the article having the surface-treating layer obtained by the present disclosure include a light detection and ranging (LiDAR) cover member, a sensor member, an instrument panel cover member, an automobile interior member, and the like, and, in particular, these members for automobiles.

The thickness of the surface-treating layer is not limited. The thickness of the surface-treating layer in the case of an optical member is in the range of 0.1 to 30 µm, and preferably 0.5 to 20 µm, from the viewpoint of optical performance, surface lubricity, friction durability, and antifouling property.

The article obtained by using the surface-treating composition of the present disclosure has been described in detail above. The application of the surface-treating agent of the present disclosure, the method of use thereof, the method of producing the article, and the like are not limited to those exemplified above.

### Examples

Hereinafter, the present disclosure will now be described with reference to, but is not limited to, Examples. In this Examples, all the chemical formulae shown below represent average compositions.

### 1. Synthesis of silicone-containing chain transfer agent

### (1) Synthesis of chain transfer agent (A-1)

To a flask were added 0.895 g of 2-[(dodecylsulfanylthiocarbonyl)sulfanyl]propanoic acid (manufactured by FUJIFILM Wako Pure Chemical Corporation), 0.031 g of 4-dimethylaminopyridine (DMAP) (manufactured by Tokyo Chemical Industry Co., Ltd.), 0.489 g of 1-ethyl-3-(3-dimethylaminopropyl) carbodiimide hydrochloride (EDCI) (manufactured by Tokyo Chemical Industry Co., Ltd.), and 10.0 g of single-end type/carbinol-modified silicone X-22-170DX (a number average molecular weight of 4,700 (manufactured by Shin-Etsu Chemical Co., Ltd.)), then 15 mL of dichloromethane was added, and the mixture was reacted by being stirred at room temperature. After being stirred overnight, the reaction solution was washed with saturated aqueous sodium bicarbonate and brine. The organic layer was separated, concentrated, and added dropwise to methanol to give 9.49 g of a yellow oily target product (A-1) in which 2-[(dodecylsulfanylthiocarbonyl)sulfanyl]propanoic acid and single-end type/carbinol-modified silicone X-22-170DX were dehydratively condensed.

### (2) Synthesis of chain transfer agent (A-2)

In the same manner as synthesis in (A-1), 9.28 g of a yellow oily target product (A-2) was obtained, except that 0.895 g of 2-[(dodecylsulfanylthiocarbonyl)sulfanyl] propanoic acid (manufactured by FUJIFILM Wako Pure Chemical Corporation) was changed to 0.608 g of 2-[(butylsulfanylthiocarbonyl)sulfanyl]propanoic acid (synthesized with reference to Macromolecules, 2005, 38, 2191-2204).

### (3) Synthesis of chain transfer agent (A-3)

In the same manner as synthesis in (A-1), 9.23 g of a yellow oily target product (A-3) was obtained, except that 0.895 g of 2-[(dodecylsulfanylthiocarbonyl)sulfanyl] propanoic acid (manufactured by FUJIFILM Wako Pure Chemical Corporation) was changed to 0.631 g of 4-cyano-4-[(thioethoxyl)sulfanyl]pentanoic acid (synthesized with reference to Tetrahedron Letters, 1999, 40,277-280).

### (4) Synthesis of chain transfer agent (A-4)

In the same manner as synthesis in (A-1), 19.5 g of a yellow oily target product (A-4) was obtained, except that X-22-170DX was changed to 21.3 g of single-end type/carbinol-modified silicone FM-0425 (a number average molecular weight of 10,000 (manufactured by JNC Corporation).

### 2. Synthesis of silicone copolymers having epoxy group

### (1) Synthesis of silicone copolymers (P-1) to (P-5) having epoxy group

First, 1.0 g of the chain transfer agent (A-1), 0.16 g of 4-hydroxybutylacrylate glycidyl ether (4HBAGE) (manufactured by Mitsubishi Chemical Corporation), and 11 mg of N,N'-azobisisobutyronitrile (AIBN) (manufactured by FUJIFILM Wako Pure Chemical Corporation) were added to a reaction vessel, and the mixture was dissolved in 2.3 mL of toluene. The mixture was heated at 75°C for 16 hours, and the reaction solution was added dropwise to methanol to precipitate and recover a block polymer (P-1). From ¹H-NMR measurement, the polymerization degree of 4HBAGE was calculated to be 3.

In the same manner as in the synthesis of (P-1), block polymers (P-2), (P-3), (P-4), and (P-5) having polymerization degrees of 5, 20, 50, and 100, respectively, were synthesized by changing the charging amount of 4HBAGE to 0.20 g, 1.0 g, 2.5 g, and 5.0 g.

### (2) Synthesis of silicone copolymer (P-6) having epoxy group

A block polymer (P-6) was obtained in the same manner as in the synthesis of (P-1) except that 1.0 g of the chain transfer agent (A-1) was changed to 1.0 g of the chain transfer agent (A-2), and the amount of 4HBAGE was changed to 0.80 g. From ¹H-NMR measurement, the polymerization degree of 4HBAGE was calculated to be 20.

### (3) Synthesis of silicone copolymer (P-7) having epoxy group

A block polymer (P-7) was obtained in the same manner as in the synthesis of (P-1) except that 1.0 g of the chain transfer agent (A-1) was changed to 1.0 g of the chain transfer agent (A-3), and the amount of 4HBAGE was changed to 0.80 g. From ¹H-NMR measurement, the polymerization degree of 4HBAGE was calculated to be 20.

### (4) Synthesis of silicone copolymer (P-8) having epoxy group

A block polymer (P-8) was obtained in the same manner as in the synthesis of (P-1) except that 1.0 g of the chain transfer agent (A-1) was changed to 1.0 g of the chain transfer agent (A-4), and the amount of 4HBAGE was changed to 0.20 g. From ¹H-NMR measurement, the polymerization degree of 4HBAGE was calculated to be 10.

### 3. Synthesis of silicone copolymers having (meth)acrylic group

### (1) Synthesis of silicone copolymers (P-13) to (P-15) having acrylic group

First, 1.0 g of the chain transfer agent (A-1), 0.08 g of 2-hydroxyethylacrylate (HEA) (manufactured by Tokyo Chemical Industry Co., Ltd.), and 10 mg of AIBN were added to a reaction vessel, and dissolved in 2.9 mL of toluene. Polymerization was carried out by heating at 70°C for 22.5 hours to obtain a solution of a block polymer (P-9). From ¹H-NMR measurement, the polymerization degree of HEA was calculated to be 3.

In the same manner as above, block polymers (P-10), (P-11), and (P-12) having polymerization degrees of 5, 20, and 100, respectively, were synthesized by changing the charging amount of HEA to 0.12 g, 0.48 g, and 2.4 g.

Then, 1.1 equivalents of 2-isocyanatoethyl acrylate (trade name: Karenz AOI, manufactured by Showa Denko K.K.) and 0.01 equivalents of dibutyltin dilaurate (DBTDL) (manufactured by Tokyo Chemical Industry Co., Ltd.) with respect to the HEA unit in the polymer (P-9) were added to the block polymer (P-9) solution obtained above, and the mixture was stirred at 40°C for 2 hours. After it was confirmed by ¹H-NMR measurement that 100% of the hydroxyl groups had reacted, the reaction solution was added dropwise to methanol to precipitate and recover a block polymer (P-13) having an acrylic group. The same reaction was carried out for the block polymers (P-10) and (P-11) to synthesize block polymers (P-14) and (P-15) having polymerization degrees of 5 and 20, respectively.

### (2) Synthesis of silicone copolymers (P-16) to (P-19) having methacrylic group

Block polymers (P-16) to (P-19) having a methacrylic group and polymerization degrees of 3, 5, 20, and 100, respectively, were synthesized from polymers (P-9) to (P-12) in the same manner as in the synthesis of (P-13) to (P-15) except that Karenz AOI was changed to 2-isocyanatoethyl methacrylate (trade name: Karenz MOI, manufactured by Showa Denko K.K.).

### 4. Synthesis of water-soluble silicone copolymer (P-20) having acrylamide group

According to "Preparation 3: Synthesis of polyDMA-based polysiloxane terminal block copolymer PTHPWCL having a crosslink in the presence of XG1996TTC and HBTTC" in Japanese Patent No. 6250647, a crosslinked polysiloxane terminal block copolymer (P-20) as set forth in Example O was synthesized as a water-soluble silicone copolymer having a crosslinkable group.

### 6. Solubility Test

The polymers (P-1) to (P-8) and (P-13) to (P-20) obtained above were added to both methyl isobutyl ketone (MIBK) and methyl ethyl ketone (MEK) so as to have a solid concentration of 20% by mass, and dissolved by being stirred with a mix rotor for 2 hours, and the solution state was visually inspected. Evaluation criteria were as follows.
Good: Transparent and uniformly dissolved
Fair: Turbid but dissolved
Poor: Not dissolved

### 7. Preparation of Coating Film

### (1) Epoxy coating

CELLOXIDE 2021P (manufactured by Daicel Corporation) as a matrix-forming epoxy compound was dissolved in MIBK, and the block polymers (P-1) to (P-8) and a simple substance of X-22-170DX were each added to the solution so that the concentration relative to the solid of the epoxy compound was 0.1% in terms of the solid content, and thereby 50% by mass epoxy compound solutions were prepared. Furthermore, a thermal acid generator San-Aid SI-60L (manufactured by Sanshin Chemical Industry Co., Ltd.) was added in an amount of 3% by mass relative to the epoxy compound to obtain a silicone-containing treatment agent. A PET substrate was coated with the silicone-containing treatment agent using a bar coater and heated at 90°C for 2 hours to obtain a cured film.

### (2) Acrylic coating

Beam Set 575CB (manufactured by Arakawa Chemical Industry Co., Ltd.) as a matrix-forming acrylic compound was dissolved in MIBK, and the block polymers (P-13) to (P-20) were added to the solution so that the concentration relative to the resin solid of Beam Set 575CB was 0.1% in terms of the solid content respectively, and thereby 50% by mass silicone-containing treatment agents were obtained. A PET substrate was coated with the silicone-containing treatment agents using a bar coater, dried at 70°C for 10 minutes, and then irradiated with ultraviolet light to obtain a cured film. Ultraviolet irradiation involved a belt conveyor type ultraviolet irradiation device, and the dose was set to 600 mJ/cm².

### (3) Epoxy coating (without block polymer)

A cured film was obtained in the same manner as in (1) except that no block polymer was added.

### 8. Presence or absence of bleedout components from cured film

The cured films prepared in 7 were touched with a finger, and then visually inspected whether whitening resulting from bleedout components was observed on the film surface. Evaluation criteria were as follows.
Good: Not whitened
Poor: Whitened

### 9. Evaluation of surface lubricity

The coefficient of static friction and the coefficient of dynamic friction of the cured films prepared in 7 were measured using a friction tester ("Tribomaster TL201Ts, manufactured by Trinity-Lab Inc.), and using a tactile contact as a friction block, under a load of 20 gf at a scanning rate of 10 mm/sec.

### 10. Contact angle evaluation

The static contact angle of water of the cured films prepared in 7 was measured using 2 µL of a liquid and using a contact angle meter ("DropMaster" manufactured by Kyowa Interface Science Co., Ltd.).

The results of the above evaluations are shown in Table 1 below.

**[Table 1]**

| Example | Silicone copolymer | Chain transfer agent | Crosslinkable moiety | Polymeriz ation degree | Hard coating agent | Solubility | | Bleed out | Static frictional coefficient | Dynamic frictional coefficient | Water contact angle (°) |
|---|---|---|---|---|---|---|---|---|---|---|---|
| | | | | | | MIBK | MEK | | | | |
| 1 | P-1 | A-1 | 4HBAGE | 3 | Epoxy | ○ | ○ | ○ | 0.281 | 0.181 | 102 |
| 2 | P-2 | A-1 | 4HBAGE | 5 | Epoxy | ○ | ○ | ○ | 0.292 | 0.182 | 103 |
| 3 | P-3 | A-1 | 4HBAGE | 20 | Epoxy | ○ | ○ | ○ | 0.290 | 0.180 | 101 |
| 4 | P-4 | A-1 | 4HBAGE | 50 | Epoxy | ○ | ○ | ○ | 0.319 | 0.210 | 100 |
| 5 | P-6 | A-2 | 4HBAGE | 20 | Epoxy | ○ | ○ | ○ | 0.312 | 0.205 | 99 |
| 6 | P-7 | A-3 | 4HBAGE | 20 | Epoxy | ○ | ○ | ○ | 0.325 | 0.198 | 100 |
| 7 | P-8 | A-4 | 4HBAGE | 10 | Epoxy | ○ | ○ | ○ | 0.280 | 0.179 | 102 |
| 8 | P-13 | A-1 | AOI-modified HEA | 3 | Acrylic | ○ | ○ | ○ | 0.283 | 0.183 | 102 |
| 9 | P-14 | A-1 | AOI-modified HEA | 5 | Acrylic | ○ | ○ | ○ | 0.290 | 0.184 | 102 |
| 10 | P-15 | A-1 | AOI-modified HEA | 20 | Acrylic | ○ | ○ | ○ | 0.308 | 0.197 | 102 |
| 11 | P-16 | A-1 | MOI-modified HEA | 3 | Acrylic | ○ | ○ | ○ | 0.281 | 0.180 | 102 |
| 12 | P-17 | A-1 | MOI-modified HEA | 5 | Acrylic | ○ | ○ | ○ | 0.287 | 0.183 | 101 |
| 13 | P-18 | A-1 | MOI-modified HEA | 20 | Acrylic | ○ | ○ | ○ | 0.294 | 0.201 | 101 |

| Comparative Example | | | | | | | | | | | |
|---|---|---|---|---|---|---|---|---|---|---|---|
| 1 | P-5 | A-1 | 4HBAGE | 100 | Epoxy | ○ | ○ | ○ | 0.351 | 0.275 | 90 |
| 2 | P-19 | A-1 | AOI-modified HEA | 100 | Acrylic | ○ | ○ | ○ | 0.355 | 0.281 | 91 |
| 3 | P-20 | - | Acrylamide | - | Acrylic | × | × | × | - | - | - |
| 4 | X-22-170DX | - | - | - | Epoxy | ○ | ○ | × | 0.292 | 0.210 | 99 |
| 5 | None | - | - | - | Epoxy | ○ | ○ | ○ | 1.608 | 0.449 | 84 |

| | | | | | | | | | | | |
|---|---|---|---|---|---|---|---|---|---|---|---|
| * Comparative Example 13 failed to produce a smooth film, and none of static contact angle, dynamic contact angle, and water contact angle tests were performed. | | | | | | | | | | | |

It was confirmed from the above results that Examples 1 to 13, which are encompassed within the scope of the present invention, have high solubility in hard coating agents and solvents, and the films had a small static and dynamic friction coefficients and a large water contact angle. Also, it was confirmed that there was no bleedout from the films, and whitening of the films did not occur. On the other hand, Comparative Examples 1, 2, 4, and 5, which are not encompassed within the scope of the present disclosure, were confirmed as having a large static and dynamic friction coefficients and a small water contact angle. Also, Comparative Example 3 had poor solvent solubility and was not able to form a smooth film.

### Industrial Applicability

The surface-treating agent of the present disclosure can be suitably used to form a surface-treating layer on the surfaces of a large variety of substrates.

## Claims

1. A silicone copolymer represented by the following formula (1) or (2): 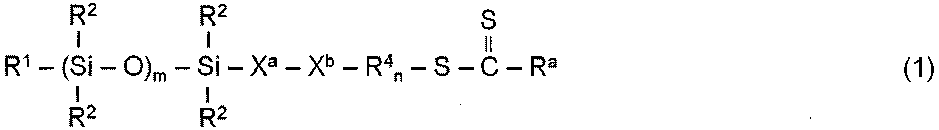 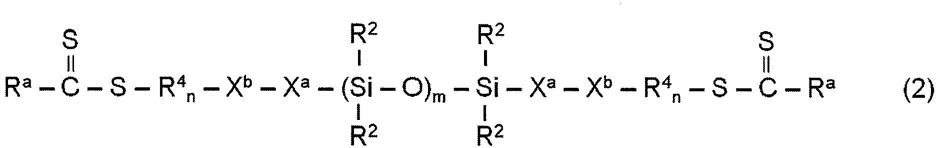 wherein
R¹ is a hydrogen atom or a C₁₋₆ alkyl group;
R² is each independently at each occurrence a hydrogen atom or a C₁₋₆ alkyl group;
m is an integer of 1 to 300;
R⁴ is each independently at each occurrence R^{4a} or R^{4b};
R^{4a} is each independently at each occurrence a divalent organic group having a crosslinkable group;
R^{4b} is each independently at each occurrence a divalent organic group not having a crosslinkable group;
the crosslinkable group is a group containing a carbon-carbon double bond, a carbon-carbon triple bond, a cyclic ether group, a hydroxyl group, a thiol group, an amino group, an azide group, a nitrogen-containing heterocyclic group, an isocyanate group, a halogen atom, a phosphoric acid-containing group, or a silane coupling group, or a group containing a precursor group thereof;
n is an integer of 1 to 90;
X^{a} is each independently a divalent organic group;
X^{b} is each independently a divalent organic group;
R^{a} is each independently alkyl, phenyl, -SR^{a1}, -OR^{a2}, - NR^{a3}₂, 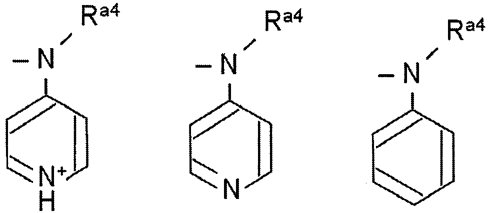 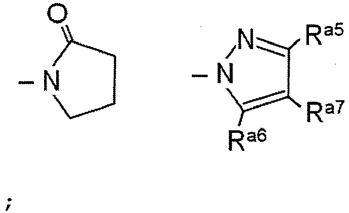
R^{a1}, R^{a2}, R^{a3}, R^{a4}, R^{a5}, and R^{a6} are each independently an alkyl group or a phenyl group; and
R^{a7} is a hydrogen atom or a halogen atom.

2. The silicone copolymer according to claim 1, which is hydrophobic.

3. The silicone copolymer according to claim 1 or 2, wherein the crosslinkable group is an epoxy group, a glycidyl group, an alicyclic epoxy group, a vinyl group, an allyl group, an optionally substituted acryloyl group, a cinnamoyl group, a 2,4-hexadienoyl group, a vinylether (vinyloxy) group, a hydroxyl group, an oxetanyl group, an isocyanate group, a catechol group, a thiol group, an amino group, an alkylamino group, a dialkylamino group, an azide group, a phosphoric acid-containing group, a carboxyl group, an imidazolyl group, a triazolyl group, a benzotriazolyl group, a tetrazolyl group, a halogen atom, a silane coupling group, or a precursor group thereof.

4. The silicone copolymer according to any one of claims 1 to 3, wherein R⁴ is R^{4a}.

5. The silicone copolymer according to any one of claims 1 to 4, wherein R^{4a} is a group represented by the following formula: 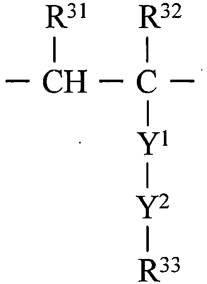 wherein
R³¹ is each independently at each occurrence a hydrogen atom or an alkyl group;
R³² is each independently at each occurrence a hydrogen atom, a chlorine atom, a fluorine atom, or an alkyl group optionally substituted with fluorine;
R³³ is each independently at each occurrence a crosslinkable group;
Y¹ is a single bond, -C(=O)O-, -C(=O)NH-, -OC(=O)-, - NHC(=O)-, -O-, -N(R^{c})-, an aromatic ring, an aromatic ring having a substituent, or carbazolylene;
R^{c} is an organic group; and
Y² is a single bond or a linker having 1 to 16 atoms in a main chain.

6. The silicone copolymer according to any one of claims 1 to 5, wherein the crosslinkable group in R^{4a} is an epoxy group, a glycidyl group, an alicyclic epoxy group, an acryloyl group, or a methacryloyl group.

7. The silicone copolymer according to any one of claims 1 to 6, wherein n is an integer of 2 to 70.

8. The silicone copolymer according to any one of claims 1 to 7, wherein n is an integer of 3 to 60.

9. The silicone copolymer according to any one of claims 1 to 8, wherein R² is each independently at each occurrence a C₁₋₆ alkyl group.

10. The silicone copolymer according to any one of claims 1 to 9, wherein m is an integer of 2 to 250.

11. A surface-treating agent comprising one or more silicone copolymers according to any one of claims 1 to 10.

12. A curable composition comprising:
the silicone copolymer according to any one of claims 1 to 10 or the surface-treating agent according to claim 11; and
a matrix-forming composition.

13. A film formed from the surface-treating agent according to claim 11 or the curable composition according to claim 12.

14. An article comprising:
a substrate; and
a layer formed on a surface of the substrate from the surface-treating agent according to claim 11 or the curable composition according to claim 12.

15. The article according to claim 14, which is an optical member.

16. The article according to claim 14, which is a LiDAR cover member.

17. The article according to claim 14, which is a sensor member.

18. The article according to claim 14, which is an instrument panel cover member.

19. The article according to claim 14, which is an automobile interior member.
